# EUROPÄISCHE PATENTSCHRIFT

(11) **EP 0 812 276 B1**
(45) Veröffentlichungstag und Bekanntmachung des Hinweises auf die Patenterteilung: **07.07.1999**
(21) Anmeldenummer: 96903003.0
(22) Anmeldetag: 27.02.1996
(51) Int. Cl.: B60T 8/48, B60T 8/24

(54) **BREMSANLAGE**
BRAKE SYSTEM
SYSTEME DE FREINAGE

(30) Priorität: 09.03.1995 DE 19508331
(43) Veröffentlichungstag der Anmeldung: 17.12.1997
(73) Patentinhaber: Continental Teves AG & Co. oHG, 60488 Frankfurt (DE)
(72) Erfinder: VOLZ, Peter, D-64291 Darmstadt (DE); ZAVISKA, Dalibor, D-65760 Eschborn (DE); LINHOFF, Paul, D-64859 Eppertshausen (DE)
(86) Internationale Anmeldenummer: EP9600795
(87) Internationale Veröffentlichungsnummer: WO9628328

(56) Entgegenhaltungen:
- EP-A- 0 460 408
- WO-A-93/08053
- DE-A- 3 929 464
- DE-A- 4 002 865
- DE-A- 4 011 329
- DE-A- 4 128 085
- DE-A- 4 132 471
- DE-A- 4 319 161
- DE-C- 3 900 851
- GB-A- 2 147 963
- US-A- 4 940 293

## Beschreibung

Die Erfindung bezieht sich auf eine Bremsanlage gemäß dem Oberbegriff des Anspruchs 1.

Eine derartige Bremsanlage ist zum Beispiel aus der EP 0 460 408 A1 bekannt. Die dort vorgesehene Ladepumpe weist einen sehr hohen Vordruck auf. In der Offenlegungsschrift ist daher ein zusätzliches Ladeventil beschrieben, das nur in seiner Durchlaßstellung geschaltet wird, wenn die Steuerventileinrichtung auf Druckaufbau geschaltet ist.

Ein derartiges zusätzliches Ventil verteuert nicht nur die Anlage, sondern bewirkt auch, daß durch das Schalten des Ventils zusätzliche Geräusche beim Betrieb der Anlage erzeugt werden.

Aus den Patentschriften US 4,940,293 A, DE 41 28 085 A1 und WO93/08053 sind bereits Bremsanlagen bekannt, die ohne zusätzliches Ladeventil auskommen.

Die Erfindung beruht auf der Aufgabe, eine Anlage gemäß dem Oberbegriff des Anspruchs 1 zu schaffen, die sich durch vergleichsweise geringe Geräuschentwicklung während eines Regelungsvorgangs auszeichnet.

Es hat sich herausgestellt, daß diese Aufgabe durch die im Anspruch 1 genannte Bremsanlage gelöst werden kann, deren Besonderheit darin besteht,
daß der Ladedruck der Ladepumpe nur wenig über der Vorspannung des Niederdruckspeichers liegt und daß die Ladepumpe in den Phasen, in denen unabhängig von einer Pedalbetätigung ein Druck in der Radbremse aufgebaut werden soll, ständig läuft und die Druckmittelförderung der Ladepumpe nur dann unterbrochen wird, wenn der Niederdruckspeicher gefüllt ist.

Dies hat den Vorteil, daß die Pumpe in einer Regelphase ständig läuft kann, das heißt, sowohl in Phasen in denen in den Radbremsen ein Druckaufbau als auch ein Druckabbau eingesteuert wird. Allenfalls kann es notwendig werden, eine Sicherungseinrichtung vorzusehen, mit der verhindert wird, daß der Niederdruckspeicher durch die Ladepumpe vollständig gefüllt wird.

Bei einer guten Abstimmung dieses Systems kann aber gegebenenfalls auch auf eine solche Einrichtung verzichtet werden.

Da die Ladepumpe gemeinsam mit der Rückförderpumpe betrieben werden Könnte, kann ein gemeinsamer Antrieb von Rückförderpumpe und Ladepumpe vorgesehen werden. Es hat sich herausgestellt, daß als Ladepumpe hydrodynamische Pumpen z.B. Kreiselpumpen besonders geeignet sind. Diese haben den Vorteil, daß für den Fall, daß ihnen kein Druckmittel entnommen wird, der Druck am Pumpenausgang steigt.

Druckmittel wird zum Beispiel dann nicht entnommen, wenn sich die Rückförderpumpe im Förderhub befindet. Dann ist das Saugventil gesperrt und an der Druckseite der Ladepumpe kann sich ein Druck aufbauen, der dazu führt, daß im Saughub der Förderpumpe das Saugventil frühzeitig geöffnet wird. Gleichzeitig bewirkt der damit einsetzende Druckabfall, daß sich der Volumendurchsatz der Kreiselpumpe erhöht, so daß ein hoher Ladeeffekt gegeben ist. Eine Kreiselpumpe wäre somit optimal an die Bedürfnisse angepaßt. Eine entsprechende Charakteristik für eine Hubkolbenpumpe läßt sich nur schwer realisieren.

Eine Kreiselpumpe hätte darüberhinaus den Vorteil, daß auf ein zusätzliches Überdruckventil, das den Ladedruck exakt einstellt, verzichtet werden kann.

Für den Fall, daß als Ladepumpe eine hydrostatische Pumpe, also zum Beispiel eine Kolbenpumpe eingesetzt werden soll, kann ein Überdruckventil vorgesehen werden. Dessen Öffnungsdruck wird vorteilhafter temperaturabhängig gestaltet, insbesondere soll sich bei niedrigeren Temperatur, also zum Beispiel bei Temperaturen unter -10°C der Öffnungsdruck erhöhen.

Die Erfindung soll anhand von fünf Figuren näher erläutert werden. Die
- Fig. 1 bis Fig. 3: zeigen verschiedene Schaltpläne; die
- Fig. 4: zeigt eine einer Ladepumpe nachgeschalteten Druckspeicher; die
- Fig. 5: zeigt den Querschnitt eines von einem Niederdruckspeicher gesteuerten Ventils.

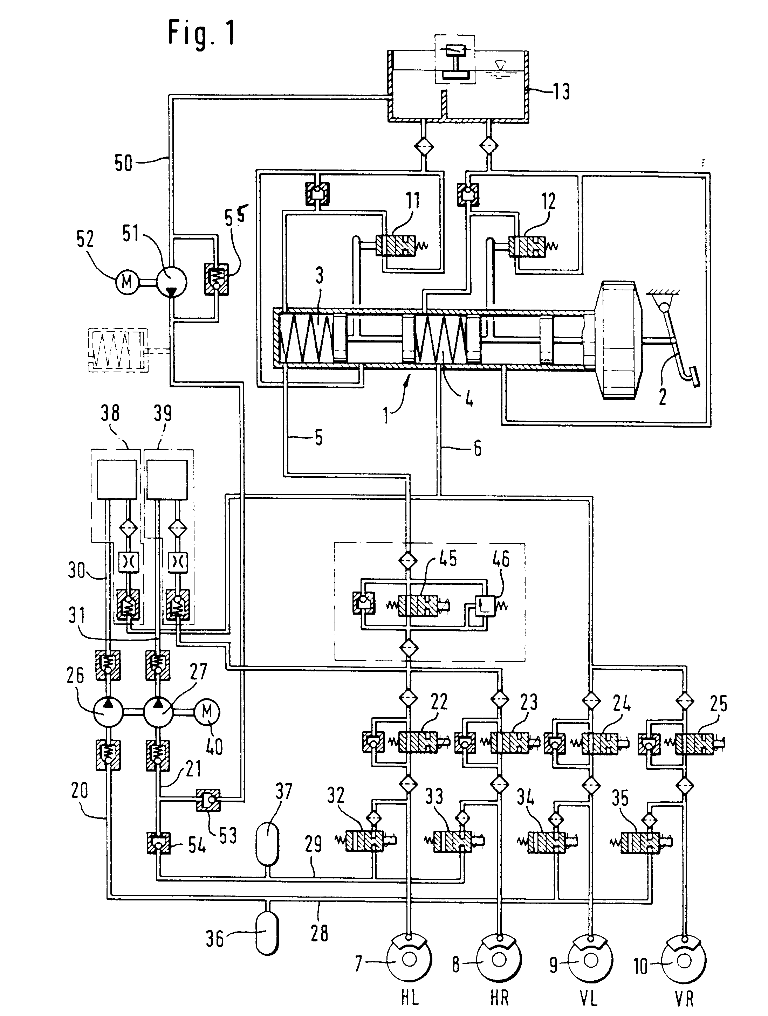

Die Fig. 1 bis 3 zeigen hydraulische Bremsanlagen, mit deren Hilfe mittels einer Pedalbetätigung als auch unabhängig davon ein Druck in den Radbremsen erzeugt werden kann.

Die Grundstruktur der Bremsanlage besteht aus einem Hauptzylinder 1, der von einem Pedal 2 betätigt wird.

In der Regel weist der Hauptzylinder 1 zwei Arbeitskammern 3, 4 auf, an die über Bremsleitungen 5, 6 Radbremsen 7,8,9,10 angeschlossen sind. Mit Betätigen des Pedals wird aus den Arbeitskammern 3, 4 Druckmittel über die Bremsleitungen 5, 6 zu den Radbremsen 7, 8, 9, 10 verdrängt, so daß sich ein Bremsdruck aufbauen kann.

Die Arbeitskammern 3, 4 stehen außerdem über Zentralventile 11, 12 mit einem Vorratsbehälter 13 in Verbindung, wobei die Zentralventile 11, 12 bei nichtbetätigtem Pedal 2 geöffnet sind, so daß in den Bremskreisen ein Druckausgleich erfolgen kann.

Üblicherweise sind jeweils zwei Radbremsen einer Arbeitskammer zugeordnet und bilden einen Bremskreis. In dem hier gezeigten Ausführungsbeispiel bilden jeweils die Radbremsen einer Achse einen Bremskreis. Dies ist eine sogenannte Schwarz-Weiß-Aufteilung. Denkbar sind aber auch andere Aufteilungen, zum Beispiel eine Diagonalaufteilung.

Dieser Grundaufbau kann ergänzt werden durch zusätzliche hydraulische Elemente, die es ermöglichen,den Druck in den Radbremsen unabhängig von der Pedalkraft einzustellen. Dies kann zum Beispiel dazu genutzt werden, den Druck in den Radbremsen so einzustellen, daß die Räder beim Abbremsen einen Schlupf aufweisen, bei dem es möglich ist, Seitenkräfte zu übertragen. Ein derartiges System wird Antiblockiersystem (ABS) genannt und erlaubt es, ein abgebremstes Fahrzeug lenkfähig zu halten.

Bei dem hier dargestellten ABS-System handelt es sich um ein System, das nach dem Rückförderprinzip arbeitet. Dazu ist jedem Bremskreis ein Pumpenkreis 20, 21 zugeordnet, mit dessen Hilfe den Radbremsen 7, 8, 9, 10 Druckmittel entnommen und in die Arbeitskammern 3, 4 des Hauptzylinders zurückgefördert werden kann.

Die verzweigten Bremsleitungen 5, 6 sind dazu mit Einlaßventilen 22, 23, 24, 25 versehen.

Die Ventile werden elektromagnetisch betätigt. In Ihren Grundstellungen sind sie offen und in ihren Schaltstellungen, das heißt bei bestromter Erregerspule, geschlossen.

Jeder Pumpenkreis 20, 21 besteht aus einer Pumpe (Rückförderpumpe) 26 bzw. 27, deren jeweilige Saugleitung 28, 29 an die Radbremsen bzw. an die Bremsleitungen zwischen den Einlaßventilen und den Radbremsen anschließen.

Die Druckseiten der Pumpen 26 und 27 schließen über Druckleitungen 30, 31 an die Bremsleitungen 5, 6 zwischen dem Hauptzylinder 1 und den Einlaßventilen an.

In den Saugleitungen 28, 29 befinden sich Auslaßventile 32, 33, 34, 35. Diese werden ebenfalls elektromagnetisch betätigt. In ihren Grundstellungen sind sie allerdings geschlossen, während sie in ihren Schaltstellungen geöffnet sind. Zwischen den Einlaßventilen und den Pumpen befindet sich an jeder Saugleitung 28, 29 ein Niederdruckspeicher 36 bzw. 37. In den Druckleitungen 30, 31 befinden sich Dämpfungselemente 38, 39, die jeweils aus einem Hochdruckspeicher, einer Drossel, einem Filter und einem Rückschlagventil bestehen.

Zum Antiblockiersystem gehören, was hier nicht dargestellt ist, Raddrehzahlsensor sowie eine Steuerelektronik, die die Einlaß und Auslaßventile betätigt, sowie den Motor 40 für die Pumpen 26, 27 ein- bzw. ausschaltet. Mittels der Signale, die von den Raddrehzahlsensoren geliefert werden, wird festgelegt, ob gegebenenfalls der Druck in einer oder mehreren Radbremsen gesenkt werden muß, damit vermieden wird, daß das zugehörige Rad blockiert. Zum Druckabbau in einer Radbremse wird das zugehörige Einlaßventil geschlossen und das zugehörige Auslaßventil geöffnet. Dies hat zur Folge, daß Druckmittel aus der Radbremse zunächst in den Niederdruckspeicher 36 bzw. 37 abfließt und dann von der Pumpe 26 bzw. 27 aufgenommen wird und zurück in die zugehörige Arbeitskammer 3 bzw. 4 gefördert wird.

Das Auslaßventil wird so lange in kurzen Pulsen geöffnet, bis der gewünschte Druckabbau erzielt worden ist. Für einen erneuten Druckaufbau wird das Auslaßventil geschlossen und das Einlaßventil impulsweise geöffnet. Zum Druckhalten werden sowohl das Einlaß- als auch das Auslaßventil geschlossen.

Bei den Pumpen 26, 27 handelt es sich in der Regel um Kolbenpumpen, die selbstansaugend oder nicht selbstansaugend ausgelegt sind. Die Niederdruckspeicher 36, 37 haben im allgemeinen ein geringes Aufnahmevolumen, das auf die Förderleistung der Pumpe 26, 27 abgestimmt ist. Sie können die Druckmittelmenge aufnehmen, die notwendig ist, um einen raschen Druckabbau in der jeweiligen Radbremse zu vollziehen.

Dieses System kann weiter ausgebaut werden, nämlich zu einem System, das in der Lage ist, auch bei nichtbetätigtem Pedal einen Druck in den Radbremsen aufzubauen. Dies kann zum Beispiel notwendig werden bei sogenannten Antriebsschlupfregelsystem (ASR), mit denen vermieden werden soll, daß bei geringen Reibwerten zwischen Fahrbahn und Reifen und zu hohen Antriebsmomenten die angetriebenen Räder durchdrehen.

Ein weiterer Anwendungsbereich sind auch sogenannte Fahrstabilitätsregelungen (FSR), bei denen durch gezielten Bremsdruckaufbau an einzelnen Rädern ein Drehmoment um die Hochachse des Fahrzeuges erzeugt werden soll, mit denen z. B. ein Über- oder Untersteuern des Fahrzeugs bei Kurvenfahrt kompensiert werden soll.

Damit diese Regelsysteme funktionieren, ist es notwendig, daß ein rascher Druckaufbau erfolgt. Dies ist insofern problematisch, da für einen effektiven Druckaufbau zunächst das Lüftspiel der Bremsen überwunden werden muß. Damit also überhaupt ein Bremsdruckaufbau erfolgen kann, muß zunächst eine erhebliche Druckmittelmenge zur Verfügung gestellt werden, mit der das Lüftspiel der Bremsen überwunden werden kann.

Dazu sind die Rückförderpumpen nicht ausgelegt, so daß sogenannte Ladepumpen eingesetzt werden. Dazu ist eine Ladeleitung 50 vorgesehen, die die Saugseite der Pumpe 27 mit dem Vorratsbehälter 13 verbindet. In dieser Ladeleitung ist eine Ladepumpe 51 eingefügt. Bei dieser Ladepumpe kann es sich ebenfalls um eine Kolbenpumpe aber auch um eine Kreiselpumpe handeln, die den Vorteil hat, daß sie sehr geräuscharm arbeitet. Die Ladepumpe fördert Druckmittel aus dem Vorratsbehälter 13 zur Saugseite der Pumpe 27.

Außerdem wird ein Trennventil 45 mit einem parallel geschalteten Überdruckventil 46 eingesetzt. Das Trennventil 45 verhindert, daß Druckmittel von den Pumpen kommend zum Vorratsbehälter 13 abfließen kann.

In dem Ausführungsbeispiel ist nur eine Ladevorrichtung für einen Bremskreis vorgesehen, nämlich für den Bremskreis, an dem die Radbremsen der angetriebenen Räder angeschlossen sind.

Wenn das System in der Lage sein soll, für jede Radbremse einen Vordruck zu erzeugen, so ist auch für die andere Pumpe eine Ladeeinrichtung vorzusehen. In dem Ausführungsbeispiel nach Fig. 1 ist für die Ladepumpe 51 ein gesonderter Antriebsmotor 52 vorgesehen.

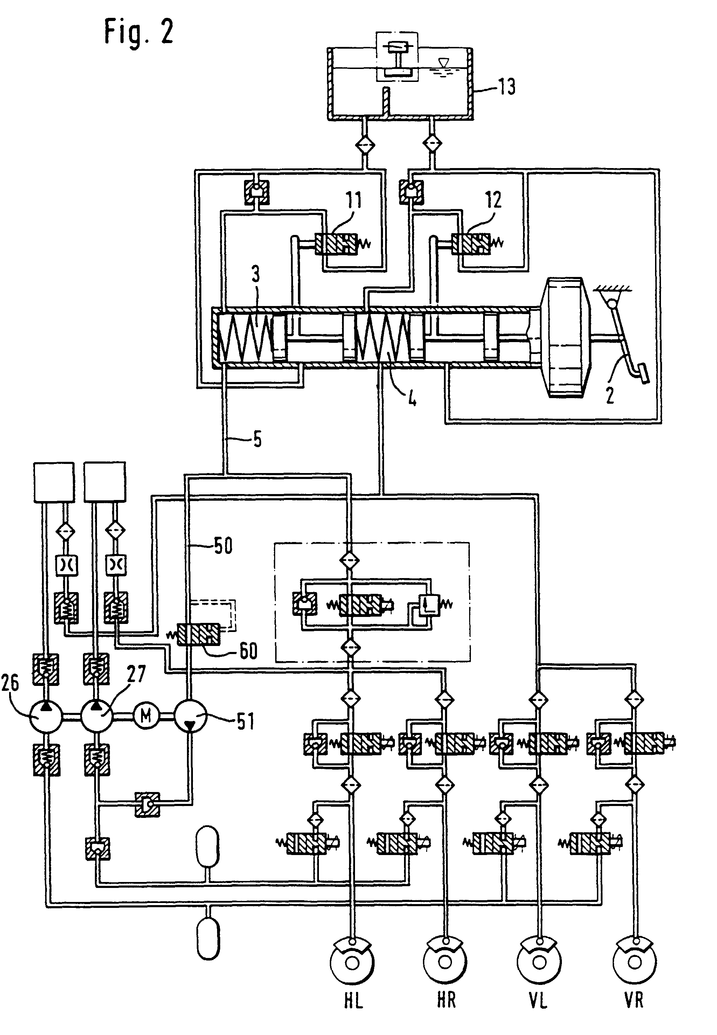

Wie aber das Ausführungsbeispiel nach Fig. 2 zeigt, kann für die Pumpen 26 und 27 sowie für die Ladepumpe 51 ein gemeinsamer Antrieb 40 vorgesehen werden.

Die Ladeleitung 50 mündet über ein Rückschlagventil 53 in die Saugseite der Pumpe 27 ein. Mit diesem Rückschlagventil 53 soll vermieden werden, daß das Druckmittel, das über die Saugleitung 29 zur Saugseite der Pumpe 27 gelangt über die Ladeleitung 50 in den Vorratsbehälter 13 abfließen kann.

Aber auch in der Saugleitung 29 ist ein Rückschlagventil 54 vorgesehen. Dieses Rückschlagventil 54 soll verhindern, daß das Druckmittel, das von der Ladepumpe 51 zur Saugseite der Pumpe 27 gefördert wird in den Niederdruckspreicher 37 gelangt. Wäre ein solches Ventil nicht vorgesehen, so könnte die Ladepumpe 51 den Niederdruckspeicher 37 füllen, so daß ein rascher Druckabbau in der Radbremse, wie oben erläutert, nicht möglich wäre.

Die Ladepumpe 51 wird nun so ausgelegt bzw. mit einem Überdruckventil 55 versehen, daß an ihrem Ausgang ein Ladedruck vorliegt, der etwas über dem Fülldruck, das ist die Vorspannung, des Niederdruckspeichers 37 liegt. Da der Fülldruck des Niederdruckspeichers 37 bei etwa 2 bar liegt, ist ein Ladedruck von etwa 3 bar geeignet.

Falls die Ladepumpe 51 als Kolbenpumpe ausgelegt wird, kann dieser Ladedruck durch ein Überdruckventil 55 eingestellt werden.

Falls als Ladepumpe 51 eine Kreiselpumpe eingesetzt wird, kann der Ladedruck durch die Dimensionierung der Kreiselpumpe 51 bestimmt werden.

Ein derartig geringer Ladedruck gegenüber den üblichen 8 bis 10 bar hat den Vorteil, daß die Ladepumpe 51 während einer Schlupfregelung ohne Unterbrechung laufen kann.

Der Druck an der Saugseite der Pumpe 27 kann nicht größer werden als der Ladedruck der Ladepumpe 51, also zum Beispiel 3 bar. Damit ist auch die untere Grenze für den Radbremsdruck festgelegt.

Beim Radbremsdruck von zum Beispiel 3 bar werden zwar noch Bremskräfte übertragen. Diese sind aber sehr gering, so daß sie für die Zwecke der Regelung zu Null angenommen werden können. Anders ist dies bei Ladedrücken in der Größenordnung von 8 bis 10 bar. Der damit verknüpfte untere Grenzwert für die Radbremsdrücke kann nicht hingenommen werden, so daß bei derartigen Ladedrücken zusätzliche Möglichkeiten geschaffen werden müssen, um die Ladepumpe 51 von der Saugseite der Pumpe zu trennen, wenn ein Druckabbau in der Radbremse erfolgen soll. Durch die Wahl des Ladedrucks zu ca. 3 bar, kann damit auf zusätzliche Mittel verzichtet werden.

Die Ausführung nach Fig. 2 entspricht im wesentlichen der Darstellung der Fig. 1 mit dem Unterschied, daß die Saugleitung 50 der Ladepumpe 51 nicht unmittelbar mit dem Vorratsbehälter 13 verbunden ist, sondern mit einer der Arbeitskammern 3, 4. Die Ladepumpe 51 ist in diesem Fall nur indirekt, nämlich über die Arbeitskammern 3, 4 und den bei nicht betätigtem Pedal 2 offenen Zentralventilen 11, 12 mit dem Vorratsbehälter 13 verbunden.

Bei dieser Ausführung kann auf einen gesonderten Anschluß am Vorratsbehälter 13 verzichtet werden. Die Verbindung zum Bremskreis kann leicht hergestellt werden, da in der Regel die Ventile und die Pumpen in einem gemeinsamen Block angeordnet sind.

Für diese Anordnung ist aber ein Sperrventil 60 vorzusehen, das entweder im Saugbereich oder im Druckbereich der Ladeleitung 50 angeordnet ist.

In der Fig. 2 ist das Sperrventil 60 im Saugbereich der Leitung 50 angeordnet.

Das Sperrventil wird hydraulisch betätigt und ist in seiner Grundstellung offen. Die Steuerleitung des Ventils (gestrichelt dargestellt) ist vom Druck in der Bremsleitung 5 belastbar.

Dies bedeutet, daß für den Fall, daß das Bremspedal betätigt wird, der in der Bremsleitung 5 aufgebaute Druck das Sperrventil 60 umschaltet und die Saugseite der Ladepumpe 51 von der Bremsleitung trennt. Der Bremsleitungsdruck kann sich in diesem Fall nicht bis zur Saugseite der Pumpe 27 fortsetzen, so daß sichergestellt ist, daß der Druck in den Radbremsen während eine Schlupfregelung abgebaut werden kann.

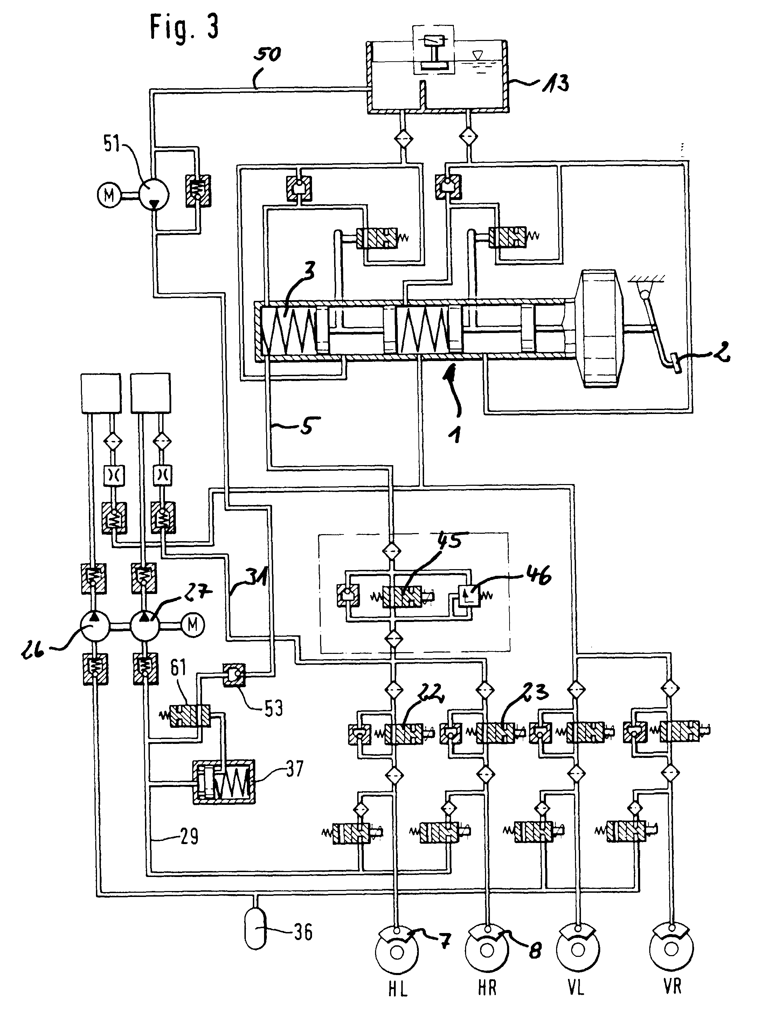

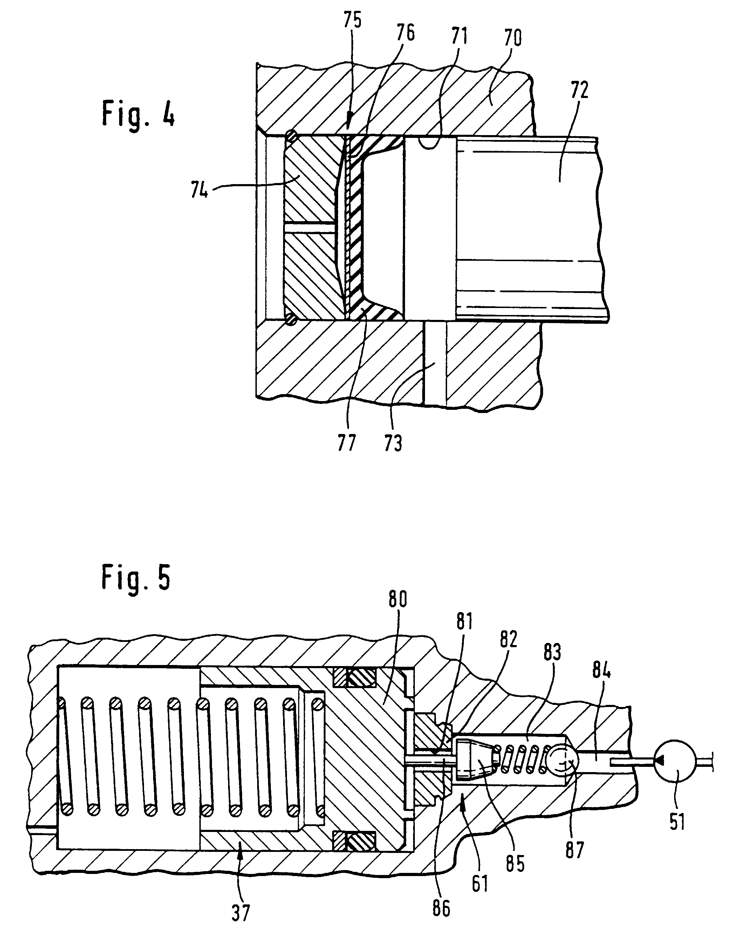

In der Fig. 3 ist eine weitere Variante dargestellt, mit der sichergestellt werden soll, daß der Niederdruckspeicher 37 nicht durch die Ladepumpe 51 gefüllt werden kann. Dazu ist das Sperrventil 61 im Druckbereich der Ladeleitung 50 vorgesehen, das mechanisch vom Kolben des Niederdruckspeichers 37 betätigt wird. Eine mögliche Ausführungsform eines derartigen Ventils wird in der Fig. 5 weiter unten näher erläutert. Zweck der Ausgestaltung ist es, daß bei einem bestimmten Füllgrad des Niederdruckspeichers 37 die Ladepumpe 51 von der Saugleitung 29 getrennt wird. Diese Schaltung kann sowohl vorgesehen werden für den Fall, daß die Ladepumpe 51, wie dargestellt, unmittelbar aus dem Vorratsbehälter 13 ansaugt, sie kann aber auch vorgesehen werden, wenn die Ansaugung über den Hauptzylinder 1 erfolgt, wie dies bei Fig. 2 erläutert worden ist.

Die dargestellten Anlagen arbeiten in der Weise, daß für den Fall, daß in den Radbremsen ein Druck aufgebaut werden soll, ohne daß das Pedal 2 betätigt worden ist, die Steuerelektronik Einschaltsignale sowohl an den Antrieb für die Pumpen 26, 27 als auch an den Antrieb der Ladepumpe 51 gibt. Außerdem wird das Trennventil 45, das sich in der Bremsleitung 5 zwischen dem Einlaßventil 22 und Arbeitskammer 3 befindet, in eine Sperrstellung gesetzt.

Die Druckleitung 31 mündet zwischen dem Einlaßventil 22 und dem Trennventil 45 in die Bremsleitung 5 ein. Das geschlossene Trennventil 45 verhindert, daß das von der Pumpe 27 geförderte Druckmittel über den Hauptzylinder 1 zum Vorratsbehälter gelangt. Vielmehr wird das Druckmittel über das offene Einlaßventil 22, 23 zu den Radbremsen 7 und 8 geleitet. Ein Überdruckventil 46 parallel zum Trennventil legt eine Obergrenze für den Pumpendruck fest. Sobald ein Radbremsdruck erreicht ist, der durch die vorgesehene Regelung (ASR, FSR) vorgegeben ist, kann eine Feinregelung durch Druckabbau, Druckhalten und erneuten Druckaufbau erfolgen. Dies geschieht ebenso wie bei einer ABS-Regelung durch das Öffnen bzw. Schließen der Ein- bzw. Auslaßventile. Es sei nochmals daraufhingewiesen, daß es durch die Wahl des Ladedrucks von ca. 3 bar möglich ist, die Ladepumpe 51 während einer ASR bzw. FSR-Regelung bei ausreichender Ladeleistung ständig laufen zu lassen. Dies reduziert zum einen den Bauaufwand und trägt zu einer Geräuschminimierung bei.

Zur Anordnung des Sperrventils 60, wie in Fig. 2 dargestellt, ist noch folgendes auszuführen. Das Sperrventil 60 kann, wie schon erläutert, entweder im Saugbereich oder im Druckbereich der Ladeleitung 50 angeordnet werden. Wird es im Druckbereich der Ladeleitung 50 angeordnet, so muß der Umschaltdruck größer sein als der Ladedruck der Ladepumpe 51. Die Anordnung hätte allerdings den Vorteil, daß im Druckbereich der Ladeleitung 50 der Drosselwiederstand des Sperrventils 60 durch einen etwas erhöhten Ladedruck der Pumpe 51 ausgeglichen werden kann.

Die Anordnung im Saugbereich der Ladeleitung 50, wie dies in Fig. 2 dargestellt ist hätte den Vorteil, daß der Umschaltdruck klein gehalten werden kann, so daß auf jeden Fall vermieden wird, daß sich der durch die Pedalbetätigung 2 erzeugte Druck sich in die Saugleitung fortpflanzt.

Zum Sperrventil 61, wie in Fig. 3 dargestellt, ist noch anzumerken, daß die Ansteuerung nicht nur mechanisch erfolgen kann, sondern ebenfalls elektromechanisch. In diesem Fall wäre es notwendig, den Füllzustand des Niederdruckspeichers mittels eines Sensors zu erfassen. Denkbar wäre auch, eine Drehzahlerkennung der Pumpen 27 durchzuführen, Das ließe Rückschlüsse auf den Füllzustand des Niederdruckspeichers zu.

In Fig. 4 ist ein Druckspeicher für eine Ladepumpe 51 vorgesehen, die als Hubkolbenpumpe ausgebildet ist. Dargestellt ist das Gehäuse 70 der Pumpe 51 mit einer Bohrung 71, in der ein Kolben 72 der Ladepumpe hin- und herbewegt wird.

Der Anschluß 73 führt zur Saugseite der Pumpe 27. Um zu erreichen, daß bei einem geringen Fördervolumen der Ladedruck leicht ansteigt, ist am Boden der Bohrung 71, die durch einen Stopfen 74 verschlossen ist, eine Federmembran 75 vorgesehen. Diese besteht aus einem federnd nachgiebigen Teller 76, auf der eine topfförmige Gummimanschette 77 aufliegt.
Der Stopfen 74 ist zum elastischen Teller 76 hin konisch ausgebildet.

Die Funktionsweise ist wie folgt:
Wenn zum Beispiel die Volumenentnahme aus der Ladepumpe 51 unterbrochen ist, weil sich die Pumpe 27 in einem Förderhub befindet, so wird sich der elastische Teller 76 leicht durchbiegen, so daß ein zusätzliches Volumen entsteht. Gleichzeitig erhöht sich die Spannung im Federteller 76, so daß der Ladedruck leicht ansteigt. Dies wiederum hat zur Folge, daß im Saughub der Pumpe 27 ein erhöhtes Ladevolumen unter einem kurzzeitig etwas erhöhtem Ladedruck zur Verfügung steht.

In der Fig. 5 ist das Sperrventil 61 sowie ein Niederuckspeicher 37 dargestellt. Der Niederdruckspeicher 37 besteht aus einem Kolben 80, der in einer Bohrung geführt ist. Im Boden der Bohrung 80 befindet sich ein Durchlaß 81, der als Ventilsitz 82 ausgebildet ist. Der Durchlaß 81 führt in eine Kammer 83, die über einen Anschluß 84 mit der Druckseite der Ladepumpe 51 verbunden ist. Im Übergang vom Anschluß 84 zur Kammer 83 ist ein Ventilschließkörper 87 vorgesehen, der das Rückschlagventil 53 (siehe Fig. 3) bildet.

In der Kammer 84 ist weiterhin ein Ventilkörper 85 angeordnet, dessen Stößel 86 durch die Bohrung 81 hindurchragt und am Kolben 80 des Niederdruckspeichers 37 anliegt.

Befindet sich der Kolben 80 am Boden der Bohrung, so wird der Ventilkörper 85 im Abstand zum Ventilsitz 82 gehalten. Das Sperrventil 61 ist damit geöffnet. Ist der Niederdruckspeicher gefüllt, so entfernt sich der Kolben 80 vom Boden der Bohrung, so daß der Stößel 86 keine Abstützung mehr erhält und der Ventilkörper 85 sich auf dem Ventilsitz 82 auflegen kann. Das Sperrventil 61 ist gesperrt.

## Patentansprüche

1. Pedalbetätigte hydraulische Bremsanlage, die in der Lage ist, auch ohne daß das Pedal betätigt ist, Druckmittel in die Radbremsen zu fördern, mit einem Hauptzylinder (1), an den Radbremsen (7, 8, 9, 10) angeschlossen sind, mit einem Pumpenkreis (21, 22), in der eine Rückförderpumpe (26, 27) vorgesehen ist, welche während einer Druckregelung die von den Radbremsen (7, 8, 9, 10) abgegebene Druckmittel in die Arbeitskammer (3, 4) des Hauptzylinders zurückfördert, sowie mit Ventilen, (22, 23, 24, 25, 32, 33, 34, 35), durch deren Ansteuerung der Druck in den Radbremsen (7, 8, 9, 10) unabhängig vom Druck im Hauptzylinder (1) eingestellt werden kann, mit einer Ladepumpe (51), deren Saugleitung mit einem Vorratsbehälter (13) verbunden ist und deren Druckleitung an die Saugseite der Rückförderpumpe (26, 27) anschließt, mit einem Niederdruckspeicher (37) an der Saugseite der Rückförderpumpe (27), der das von den Radbremsen (7) abgegebene Druckmittel zwischenspeichert, dadurch **gekennzeichnet**, daß der Ladedruck der Ladepumpe (51) nur wenig über der Vorspannung des Niederdruckspeichers (37) liegt, und daß die Ladepumpe (51) in den Phasen, in denen unabhängig von einer Pedalbetätigung ein Druck in der Radbremse (7, 8, 9, 10) aufgebaut werden soll, ständig läuft und die Druckmittelförderung der Ladepumpe nur dann unterbrochen wird, wenn der Niederdruckspeicher (37) gefüllt ist.

2. Bremsanlage nach Anspruch 1, dadurch **gekennzeichnet**, daß der Ladedruck der Ladepumpe (51) bei ca. 3 bar liegt.

3. Bremsanlage nach Anspruch 3, dadurch **gekennzeichnet**, daß die Rückförderpumpen (26, 27) einen gemeinsamen Antrieb haben mit der Ladepumpe (51).

4. Bremsanlage nach Anspruch 1, dadurch **gekennzeichnet**, daß die Ladepumpe (51) als hydrodynamische Pumpe ausgebildet ist.

5. Bremsanlage nach Anspruch 1, dadurch **gekennzeichnet,** daß die Ladepumpe (51) als Kolbenpumpe mit einem Überdruckventil ausgestaltet ist.

6. Bremsanlage nach Anspruch 5, dadurch **gekennzeichnet,** daß das Überdruckventil temperaturabhängig schaltet.

7. Bremsanlage nach Anspruch 7, dadurch **gekennzeichnet,** daß das Überdruckventil derart temperaturabhängig geschaltet wird, daß bei Temperaturen unter -10°C der Öffnungsdruck des Überdruckventils (55) erhöht wird.

## Claims

1. Pedal-operated hydraulic brake system which is capable of delivering pressure fluid into the wheel brakes without application of the pedal, including a master cylinder (1) to which wheel brakes (7, 8, 9, 10) are connected, a pump circuit (21, 22) wherein a return pump (26, 27) is incorporated which returns pressure fluid discharged from the wheel brakes (7, 8, 9, 10) into the working chamber (3, 4) of the master cylinder, and valves (22, 23, 24, 25, 32, 33, 34, 35) which, when actuated, permit the pressure in the wheel brakes (7, 8, 9, 10) to be adjusted irrespective of the pressure in the master cylinder (1), a charging pump (51) having a suction line which is connected to a supply reservoir (13) and a pressure line which is connected to the suction side of the return pump (26, 27), a low-pressure accumulator (37) on the suction side of the return pump (27) which provides for the intermediate storage of the pressure fluid discharged from the wheel brakes (7),
**characterized** in that the charging pressure of the charging pump (51) exceeds the prestress condition of the low-pressure accumulator (37) only to a slight extent, and in that the charging pump (51) is in continuous operation in those phases, where pressure shall be built up in the wheel brake (7, 8, 9, 10) irrespective of pedal application, and the pressure fluid delivery of the charging pump is interrupted only when the low-pressure accumulator (37) is filled.

2. Brake system as claimed in claim 1,
**characterized** in that the charging pressure of the charging pump (51) amounts to 3 bar approximately.

3. Brake system as claimed in claim 1,
**characterized** in that the return pumps (26, 27) and the charging pump (51) have one joint drive.

4. Brake system as claimed in claim 1,
**characterized** in that the charging pump (51) is a hydrodynamic pump.

5. Brake system as claimed in claim 1,
**characterized** in that the charging pump (51) is a piston pump including a pressure relief valve.

6. Brake system as claimed in claim 5,
**characterized** in that the pressure relief valve is operated temperature-responsively.

7. Brake system as claimed in claim 6,
**characterized** in that the pressure relief valve is operated temperature-responsively so that the opening pressure of the pressure relief valve (55) is increased at temperatures below -10°C.

## Revendications

1. Système hydraulique de freinage à commande par pédale, capable d'envoyer du fluide sous pression dans les freins de roues même lorsque la pédale n'est pas actionnée, comprenant un maître-cylindre (1) auquel sont raccordés des freins de roues (7, 8, 9, 10), comprenant un circuit de pompes (21, 22) dans lequel est prévu une pompe de renvoi (26, 27) qui renvoie dans la chambre de travail (3, 4) du maître-cylindre le fluide sous pression sortant des freins de roues (7, 8, 9, 10) lors d'une régulation de la pression, et comportant des valves (22, 23, 24, 25, 32, 33, 34, 35) dont le pilotage permet de régler la pression régnant dans les freins de roues (7, 8, 9, 10) indépendamment de celle du maître-cylindre (1), comprenant une pompe de gavage (51) dont la conduite d'aspiration est reliée à un réservoir (13) et dont la conduite de refoulement est raccordée au côté aspiration de la pompe de renvoi (26, 27), comprenant un accumulateur basse pression (37) disposé du côté aspiration de la pompe de renvoi (27), emmagasinant temporairement le fluide sous pression sortant des freins de roues (7),
caractérisé en ce que la pression de gavage de la pompe de gavage (51) ne se situe que très peu au-dessus de la pression initiale de l'accumulateur basse pression (37), et en ce que la pompe de gavage fonctionne de manière continue pendant les phases où une pression doit être établie dans les freins de roues (7, 8, 9, 10) indépendamment d'un actionnement de la pédale, et que le débit de fluide sous pression de la pompe de gavage n'est interrompu que lorsque l'accumulateur basse pression (37) est plein.

2. Système de freinage selon la revendication 1, caractérisé en ce que la pression de gavage de la pompe de gavage (51) se situe aux alentours de 3 bars.

3. Système de freinage selon la revendication 1, caractérisé en ce que les pompes de renvoi (26, 27) et la pompe de gavage (51) comportent un entraînement commun.

4. Système de freinage selon la revendication 1, caractérisé en ce que la pompe de gavage (51) est réalisée sous forme d'une pompe hydrodynamique.

5. Système de freinage selon la revendication 1, caractérisé en ce que la pompe de gavage (51) est réalisée sous forme d'une pompe à piston munie d'un clapet de surpression.

6. Système de freinage selon la revendication 5, caractérisé en ce que l'action de commutation du clapet de surpression est dépendante de la température.

7. Système de freinage selon la revendication 7, caractérisé en ce que l'action de commutation du clapet de surpression est dépendante de la température, de manière telle qu'à des températures inférieures à -10 °C, la pression d'ouverture du clapet de surpression (55) soit relevée.
